# EUROPEAN PATENT SPECIFICATION

(11) **EP 2 408 042 B1**
(45) Date of publication and mention of the grant of the patent: **04.01.2017**
(21) Application number: 11173465.3
(22) Date of filing: 11.07.2011
(51) Int. Cl.: H01M 2/10, H01M 2/34, H01M 10/42

(54) **Battery pack**
Batteriepack
Bloc-batteries

(30) Priority: 16.07.2010 US 365254 P; 20.01.2011 US 201113010758
(43) Date of publication of application: 18.01.2012
(73) Proprietor: Samsung SDI Co., Ltd., Yongin-si, Gyeonggi-do (KR)
(72) Inventor: PARK, Kyung-Ho, Gyeonggi-do (KR); KOH, Seok, Seok, Gyeonggi-do (KR)
(74) Representative: Mounteney, Simon James

(56) References cited:
- EP-A1- 2 325 917
- JP-A- 2009 043 462
- JP-A- 2009 272 234
- US-A1- 2005 202 315
- US-A1- 2005 208 375
- US-A1- 2009 087 692
- US-A1- 2009 317 703

## Description

### BACKGROUND

### 1. Field of the Invention

The invention relates to a battery pack, particularly a battery pack including a plurality of secondary batteries.

### 2. Discussion of Related Art

Recently, the demand for increasing the capacity of secondary batteries has been significant due to rapid developments in the electronic, communication and computer industries.

In general, it is possible to increase the size of the secondary batteries themselves or include a plurality of secondary batteries in one pack, in order to increase capacity. Increasing the size of the secondary batteries can cause a problem in terms of safety. Therefore, efforts have concentrated on providing a plurality of secondary batteries in one battery pack and improving performance of the battery pack.

Document US2005/202315 discloses a battery pack with a plurality of battery cells accommodated in a frame.

### SUMMARY OF THE INVENTION

The present invention sets out to provide a battery pack that may be manufactured to have high capacity by including a plurality of secondary batteries in the battery pack.

Further, the present invention sets out to provide a battery pack in which the number of components is minimised.

Accordingly, the invention provides a battery pack as set out in claim 1. Preferred features of the invention are set out in claims 2 to 10.

Since embodiments of the invention can make it possible to reduce the number of parts compared to a conventional battery pack, production costs can be reduced. Since aproduction method for the battery pack can then also be made simple, manufacturing efficiency can be improved.

Furthermore, in some embodiments of a battery pack according to the present invention, it is possible to connect a plurality of secondary battery cells, using a single PCM assembly. This can be particularly effective in in simplifying the structure of the battery pack and furthermore the PCM assembly can serve to secure the position of the secondary battery cells accommodated in the battery pack so that they are not moved in the battery pack by an external shock, such as drop, and they are thus electrically stable.

Further, some embodiments of a battery pack according to the present invention provide a case fixing a plurality of secondary battery cells, which enhances stability of the structure. The case may be easily modified in accordance with the shape of the secondary batteries accommodated in the battery pack.

### BRIEF DESCRIPTION OF THE DRAWINGS

The accompanying drawings illustrate embodiments of the present invention, and, together with the description, serve to explain the principles of the present invention.
FIG. 1 is a perspective view of a battery pack according to an embodiment of the present invention;
FIG. 2 is an exploded view of the battery pack shown in FIG. 1;
FIG. 3 is an exploded view of the secondary battery accommodated in the battery pack shown in FIG. 1;
FIG. 4A is a perspective view of a sub-frame included in the battery pack shown in FIG. 1;
FIG. 4B is a perspective view of the sub-frame rotated at 180° from FIG. 4A;
FIG. 5 is a perspective view illustrating that the secondary battery is accommodated in the sub-frame and schematically showing a PCM assembly;
FIG. 6 is a perspective view of the sub-frame equipped with the secondary battery and the PCM assembly;
FIG. 7 is a perspective view of the sub-frame equipped with first and second main frame;
FIG. 8 is a cross-sectional view taken along line A-A of FIG. 7;
FIG. 9 is a perspective view showing a battery pack according to another embodiment not forming part of the present invention;
FIG. 10 is a perspective view of the secondary battery accommodated in the battery pack shown in FIG. 9; and
FIG. 11 is a perspective view of a sub-frame included in the battery pack shown in FIG. 9.

### DETAILED DESCRIPTION OF THE INVENTION

Embodiments of the present invention are described hereafter in detail with reference to the accompanying drawings. However, the present invention may be changed and modified in various ways within the scope of the claims; therefore, it should be understood by those skilled in the art that the embodiments described below are mere examples.

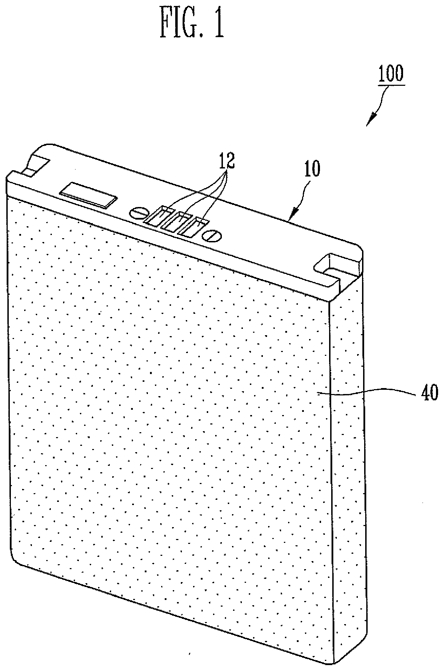

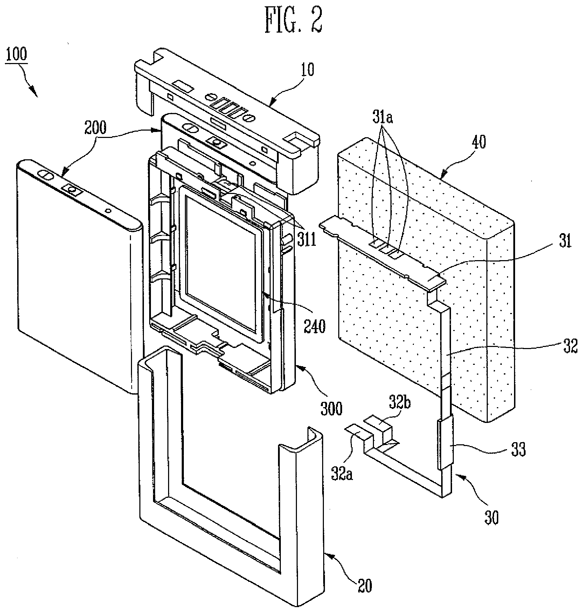

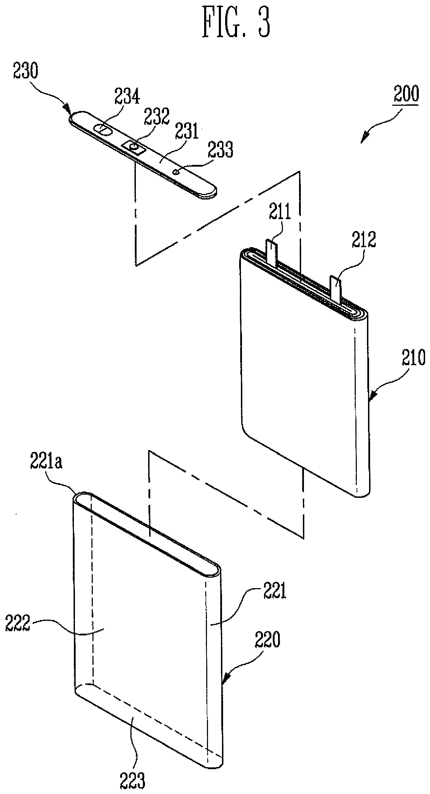

FIG. 1 is a perspective view of a battery pack according to an embodiment of the present invention and FIG. 2 is an exploded view of the battery pack according to this embodiment. FIG. 3 is an exploded view of a secondary battery cell according to this embodiment.

Referring to FIGS. 1 and 2, a battery pack 100 according to this embodiment includes: a plurality of secondary battery cells 200 and a rectangular sub-frame 300 fixing the sides of the secondary battery cells 200 and having an opening corresponding to the bottoms of the secondary battery cells 200. Further, the battery pack 100 further includes: a PCM assembly 30 attached to a side of the sub-frame 300 and electrically connected with the secondary battery cells 200; first and second main frames 10, 20 covering the sides of the sub-frame 300; and a covering member 40 covering the first and second main frame 10, 20 and the secondary battery cells 200.

Although this embodiment includes the sub-frame 300 and main frames 10, 20, the invention is not limited to such a construction. In some embodiments only a single frame need be present. Such a frame can be a unitary structure or a composite structure formed from a plurality of components.

Referring to FIGS. 2 and 3, the secondary battery cells 200 are each composed of an electrode assembly 210, a can 220, and a cap assembly 230. The electrode assembly 210 is formed by winding a first electrode plate, a second electrode plate, and separators.

As shown in FIG. 3, the first electrode plate and the second electrode plate of the electrode assembly 210 have first and second electrode leads 211, 212, respectively. The electrode assembly 210 is electrically connected with the outside by the first and second electrode leads 211, 212 attached to the electrode plates. Hereinafter, the first electrode plate is referred to as an anode plate and the second electrode plate is referred to as a cathode plate, for the convenience of description, but the invention is not so limited.

As described above, the electrode assembly 210 is formed by winding an anode plate, a cathode plate, and separators interposed between the electrode plates. The electrode assembly 210 formed as described above is accommodated in the can 220, as shown in FIG. 3. Further, an electrolyte is also accommodated in the can 220 and the opening of the can is sealed with the cap assembly 230.

The cap assembly 230 includes a cap plate 231, and a cathode pin 232, an electrolyte injection hole 233, and a safety vent 234 disposed in the cap plate 231.

The cathode pin 232 is connected to the second electrode lead 212 to function as a cathode terminal. Further, the first electrode lead 211 is spaced apart from the second electrode lead 212 and welded to the cap plate 231 to function as an anode terminal. At this time, the first and second electrode leads 211, 212 may be attached to the electrode plates by resistance welding or laser welding.

The electrolyte injection hole 233 is formed at one side of the cap assembly 230. The electrolyte injection hole 233 is used for injecting an electrolyte during manufacture of the battery pack. After the cap assembly 230 is disposed over the opening of the can 220, the electrolyte is injected through the electrolyte injection hole 233. Thereafter, the electrolyte injection hole 233 is sealed by a separate sealing member containing aluminum. Further, it is possible to prevent outside air into the electrolyte injection hole 233 by applying silicon to the upper of the separate sealing member. As described above, the electrolyte injection hole 233 applied with silicon has a hemispherical shape.

A safety vent 234 is formed at the other side of the cap assembly 230 to allow a gas to be discharged, when the internal pressure of the secondary battery cell 200 increase above a predetermined pressure.

The can 200, for example, may be made of aluminum. Further, the can 220 has a rectangular parallelepiped shape with rounded sides. The can 220 has a bottom 223 opposite to the cap assembly 230. The sides of the can 220 are composed of two wide sides 222 and two narrow sides 221 connecting the two wide sides 222, and the wide sides 222 and the narrow sides 221 face each other, respectively. In the can 220, the wide sides 222 and the narrow sides 221 are integrally formed with the bottom 223. The narrow sides 222 are shown to have rounded portions 221 a in the figures. However, the shape of secondary battery cells that can be accommodated in a battery pack according to the present invention is not limited in the rectangular parallelepiped described above.

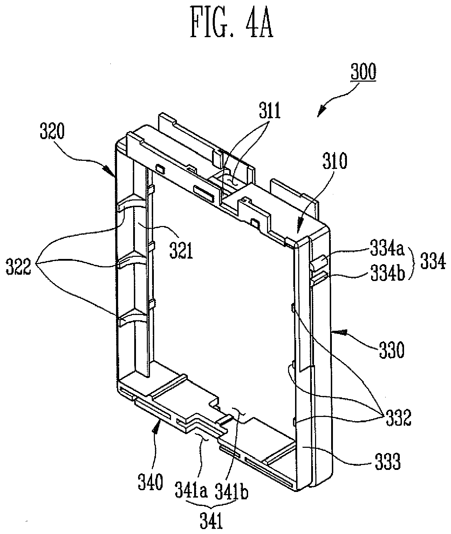

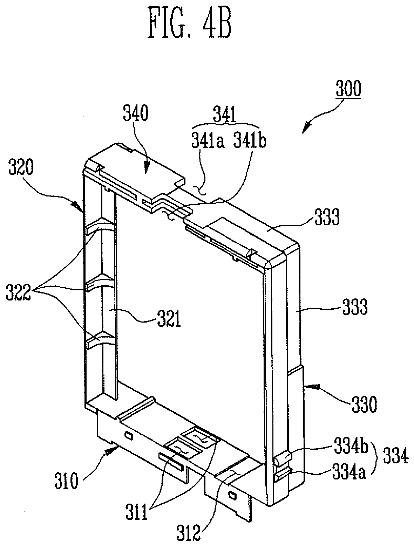

FIG. 4A is a perspective view of a sub-frame according to this embodiment and FIG. 4B is a perspective view of the sub-frame rotated at 180° from FIG. 4A.

Referring to FIGS. 4A and 4B, the sub-frame 300 has a top 310, a bottom 340 opposite to the top 310, and two sides 320, 330 extending from sides of the top 310 and the bottom 340. As shown in the figures, the sub-frame 300 is a rectangular parallelepiped with the opposite wide sides open.

The PCM assembly 30 (see FIG. 2) is mounted on the top 310 of the sub-frame 300. Further, the top 310 has two cathode pin holes 311. The cathode pins of the secondary battery cells 200 accommodated in the sub-frame 300 are exposed through the cathode pin holes 311. The cathode pins exposed through the cathode pin holes 311 are electrically connected with the PCM assembly that is mounted on the top of the sub-frame 300 by electrode leads made of nickel etc.

Although a respective cathode pin hole is shown for each cathode pin, both pins could, for example, project via a common hole or other configuration that includes one or more openings. Furthermore one or more intermediate connections could extend through the hole rather than the cathode pins. Such an intermediate connection need not be connected to an electrode terminal, but could connect with an electrode of the battery cells directly or in some other way, such as via the can.

Referring to FIGS. 3 and 4B, the top 310 of the sub-frame 300 has an electrolyte injection hole guide 312 at one side on the inner surface. The guide 312 is stepped to the other potions. The guide 312 corresponds to the electrolyte injection hole 233 of the secondary battery cell 200, when the secondary battery cell 200 is accommodated inside the sub-frame 300. In general, silicon is applied to the electrolyte injection hole 233 of the secondary battery cell 200 to reinforce the sealing of the secondary battery cell 200. Accordingly, the electrolyte injection hole 233 applied with silicon has a convex shape relative to the other portions. The guide 312 is formed on the inner surface of the top 310 of the sub-frame 300 to correspond to the electrolyte injection hole 233 of the secondary battery cell 200. The guide 412 removes influence of the increased height of the electrolyte injection hole 233 applied with silicon. As described above, the guide 312 locates the secondary battery cell 200 and facilitates combination of the secondary battery cell 200 and the sub-frame 300. Therefore, the secondary battery cell 200 is firmly accommodated inside the sub-frame 300.

Further, the sub-frame 300 has two sides 320, 330 extending from both ends of the top 310. Hereinafter, the side at the left in the figure is referred to as a first side 320 and the side at the right is referred to as a second side 330, for the convenience of description. However, this is for making it easy to explain the sub-frame 300 and the first and second sides 320, 330 may be exchanged to the left and right. Further, the components and function of the first and second sides 320, 330 may be appropriately modified in accordance with the design of the battery pack 100 including the sub-frame 300.

As will be seen in Figure 4A, the first side 320 incorporates a flange 321 extending from the inner surface and fixing ribs 322. The flange 321 constitutes a spacer formation. Alternative embodiments use different spacer formations which include various kinds of projections, some of which are unitary and some of which are formed of discrete elements.

The flange 321 protrudes from the center of the inner surface of the first side 320. Further, the flange 321 is formed to the inner surface of one end portion of each of the top 310 and the bottom 340. That is, the flange 321 is formed in perpendicular contact to one end portion of the top 310 and one end portion of the bottom 340, inside the sub-frame 300. The flange 321 functions as a rib supporting the inside of the sub-frame 300 and guiding and spacing the two secondary battery cells 200 accommodated inside the sub-frame 300.

The fixing ribs 322 are in perpendicular contact with the flange 321 and the inner surface of the first side 320. The fixing ribs 322 are connected with the inner surface of the first side 320 and the flange 321, where flange 321 perpendicularly joints the inner surface of the first side 320. In the fixing ribs 322, the portions are rounded. The fixing ribs 322 contact the secondary battery cell that is accommodated inside the sub-frame 300 and have a shape corresponding to the sides of the secondary battery cell. As shown in FIG. 3, the sides of the secondary battery cell 200 are fully rounded. Therefore, the fixing ribs 322 are rounded to correspond to the sides of the secondary battery cell.

As described above, the fixing ribs 322 fix the secondary battery cell accommodated inside the sub-frame 300. Therefore, the secondary battery cell is not easily moved by an external shock, after being accommodated inside the sub-frame 300. Although there are three fixing ribs 322 spaced at a regular distance from each other in the figure, the number and position of the fixing ribs 322 are not limited thereto. That is, the fixing ribs 322 only have to prevent the secondary battery cell from moving inside the sub-frame, in contact with the side of the secondary battery cell.

The second side 330 is opposite to the first side 320 of the sub-frame 300. The second side 330 is also provided with a flange (not shown) and fixing ribs 332. The flange and the fixing ribs 332 have the same configuration and function as the flange 321 and the fixing ribs 322 on the first side 321 described above. Further, although it is shown in the figure when the fixing ribs 332 are formed at the positions corresponding to the fixing ribs 322 on the first side 320, it is not limited thereto. As described above, the fixing ribs 332 have only to fix the secondary battery cell accommodated inside the sub-frame 300 to prevent the secondary battery cell from moving inside the sub-frame 300. However, it will be preferable to form the flanges 321 and the fixing ribs 322, 332 at the same positions on the first and second sides 320, 330 in order to reduce the manufacturing cost of the sub-frame 300.

The second side 330 further has a stepped portion 333 in the form of a recess. The second side 330 is basically the same as the first side 320 of the sub-frame, except for the stepped portion 333 formed on the outer surface. Further, although the stepped portion 333 of this embodiment is on the second side, that is, shown at the right of the sub-frame 300 in the figure, it is not limited thereto. The stepped portion 333 may be formed at the left of the sub-frame 300 or may be formed at both left and right of the sub-frame 300.

The stepped portion 333 extends on the second side 330. The stepped portion 333 is a portion where the electrode lead 32 of the PCM assembly 30 is seated. The electrode lead 32 electrically connects the PCM 31 with the secondary battery cell 200. The stepped portion 333, in the sub-frame 300, extends from the joint of the top 310 and the second side 330 to the bottom 340 of the sub-frame 300 along the second side 330. That is, the stepped portion 333 extends to an opening 341 formed at the bottom 340 of the sub-frame 300.

As shown in the figure, the stepped portion 333 is formed along the second side 330 at one end portion of the second side 330 to be stepped with respect to the other portions. That is, the stepped portion 333 has lower thickness than the other portions as much as the thickness of the electrode lead 32 of the PCM assembly 30. Therefore, when the electrode lead 32 is seated in the stepped portion 333, the thickness of the electrode lead 32 is added to the stepped portion 333, and accordingly, the small height of the stepped portion 333 is compensated. That is, the stepped portion 333 has a height close to the other portions, because the difference from the other potion is removed.

Further, locking protrusions 334 are formed on the outer surfaces of the first and second sides 320, 330 such that the first and second main frames 10, 20 shown in FIG. 2 are combined. The locking protrusions 334 are locked in locking grooves on the inner surface of the first and second main frame 10, 20 such that the sub-frame 30 and the first and second main frames 10, 20 are combined. The locking protrusions 334 and locking grooves together constitute locking formations.

In detail, the locking protrusions 334 have a first locking protrusion 334a and a second locking protrusion 334b. The first locking protrusion 334a is locked in the locking groove formed on the inner surface of the first main frame 10 and the second locking protrusion 334b is locked in the locking groove formed on the inner surface of the second main frame 20. Further, although only the locking protrusions 334 formed on the second side 330 are shown in FIG. 4A and 4B, locking protrusions (not shown) having the same configuration and function are formed on the outer surface of the first side 320. That is, the locking protrusions may also be composed of first and second locking protrusion, and as described above, are locked in the locking grooves of the first and second main frames.

On the other hand, it is possible to combine the sub-frame 300 with the first and second main frames 10, 20 shown without the locking protrusions and locking grooves using a separate adhesive or a double-sided tape.

Further, the sub-frame 300 according to this embodiment has a pair of openings 341a, 341b at the bottom 340. The openings 341a, 341b include a first opening 341a and second opening 341b. The first opening 341a is extended from the stepped portion 333 on the second side 330 and the second opening 341b is formed near the first opening 341a.

The first and second openings 341a, 341b expose a portion of the secondary battery cells accommodated inside the sub-frame 300. That is, a portion of the bottom shown in FIG. 3 is exposed to the outside through the first and second openings 341, 341b. The portions of the bottom 223 of the secondary battery cells, which are exposed to the outside, is in contact with the electrode leads 32, 32a, 32b of the PCM assembly 30. Therefore, the secondary battery cells are electrical connected to the PCM assembly 30 through the electrode leads 32, 32a, 32b.

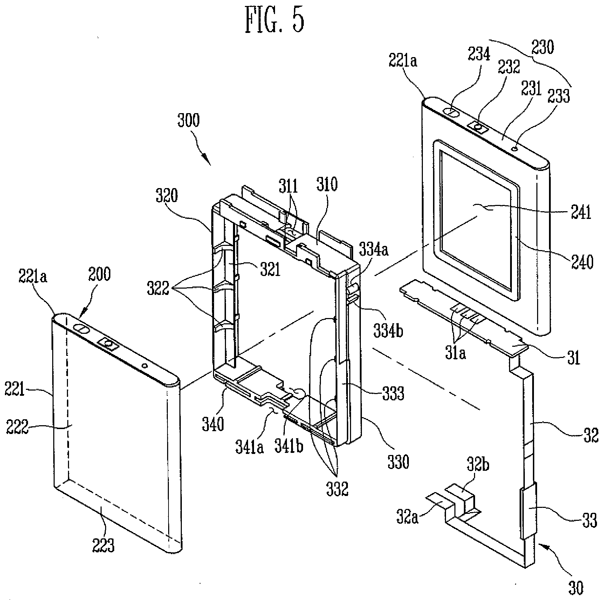

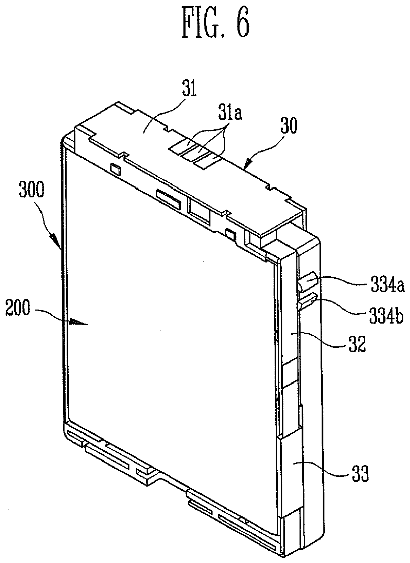

Referring to FIGS. 5 and 6, the connection structure of the sub-frame 300, the secondary battery cell 200, and the PCM assembly 30 described.

FIG. 5 is a perspective view illustrating that the secondary battery cell is accommodated in the sub-frame and schematically showing a PCM assembly and FIG. 6 is a perspective view of the sub-frame equipped with the secondary battery and the PCM assembly.

As described above, the battery pack according to this embodiment includes the sub-frame 300, two secondary battery cells 200 accommodated inside the sub-frame 300, and the PCM assembly 30 electrically connected with the secondary batteries 200. The PCM assembly 30 includes a PCM 31 mounted on the top of the sub-frame 300 and the electrode lead 32 positioned on the side and bottom 340 of the sub-frame.

Further, an adhesive member 240 is disposed between the opposite wide sides 222 of the two secondary battery cells 200. The adhesive member 240 may be, for example, a double-sided tape. The adhesive member 240 fixes the secondary battery cells 200 each other when the secondary battery cells 200 are accommodated inside the sub-frame 300. Therefore, it becomes simple to accommodate the secondary battery cells 200 inside the sub-frame 300. Further, the adhesive member 240 has a hole 241 therein. The hole 241 has a rectangular shape, but the invention is not limited thereto.

The electrode assemblies 210 (see FIG. 3) of the secondary battery cells 200 may swell, when the secondary battery cells 200 are charged or discharged. The swollen electrode assembly increases the thickness of the secondary battery cell 200, particularly, the thickness of the center potion of the wide side 222 of the secondary battery cell 200. When the thickness of the secondary battery 200 increases, as described above, the hole 241 provides a space that can compensate the increased thickness of the secondary battery cell 200. That is, bonding force is increased by interposing the adhesive member 240 between the secondary battery cells 200 facing each other and it is possible to firmly fix the secondary batteries inside the sub-frame 300 by providing a space between the secondary battery cells 200 facing each other, removing the swelling problem.

A method of accommodating the secondary battery cells 200 inside the sub-frame 300 is described hereafter.

First, the adhesive member 240 is attached to the wide side 222 of the secondary battery cell 200. Thereafter, the secondary battery cell 200 is accommodated, with the adhesive member 240 facing the inside of the sub-frame 300. After one secondary battery cell 200 is accommodated inside the sub-frame 300, the adhesive member 240 may be attached to any one or more of the secondary battery cell 200 accommodated already or a secondary battery cell 200 that is yet to be accommodated. In the secondary battery cell 200 accommodated as described above, the cap assembly 230 of the secondary battery cell 200 corresponds to the top 310 of the sub-frame 300 and the bottom 223 of the secondary battery cell 200 corresponds to the bottom 340 of the sub-frame 300. Further, in the cap assembly of the secondary battery cell 200, the cathode pin 232 is exposed to the outside through the cathode pin hole 311 formed through the top 310 of the sub-frame 300. Further, a portion of the bottom 223 of the secondary battery cell 200 is exposed to the outside through the openings 341, 341a, 341b formed through the bottom 340 of the sub-frame 300.

The sides 221 of the secondary battery cell 200 are corresponded to the first and second sides 320, 330 of the sub-frame 300. In particular, the rounded narrow sides 221a of the secondary battery cell 200 are corresponded to the fixing ribs 322, 332 on the first and second sides 320, 330 of the sub-frame 300.

The other secondary battery cell 200 is accommodated inside the sub-frame 300 in this way, as described above. The secondary battery cell 200 accommodated layer is separated by the flanges 321 of the first and second sides 320, 330 of the sub-frame 300. Further, the cathode pin 232 and the bottom 223 of the secondary battery 200 are exposed through the sub-framed, in the same way as described above.

Further, referring to FIG. 5, the PCM assembly 30 includes the PCM 31 and the electrode lead 32. The PCM 31 is electrically connected with the secondary battery cell 200 through the electrode lead 32. Therefore, when the secondary battery cell 200 is overcharged or overdischarged, it is possible to prevent the secondary battery from being overcharged or overdischarged by controlling a switching element of the PCM 31.

The PCM 31 has external terminals 31 a electrically connected with the outside. Further, the PCM assembly 30 has the electrode lead 32 extending from the PCM 31 to be connected with the bottom 223 of the secondary battery cell 200. The ends 32a, 32b of the electrode lead 32 are separated and electrically connected to the bottoms 223 of the two secondary battery cells 200, respectively.

The PCM 31 is seated on the top 310 of the sub-frame 300. The electrode lead 32 of the PCM assembly 30 is seated on the stepped portion 333 of the second side 330 of the sub-frame 300. Therefore, the stepped portion 333 including the electrode lead 32 may be made flat with the same thickness the same thickness as the other portions. Further, the electrode lead 32 is connected to the openings 341a, 341b formed through the bottom 340 of the sub-frame 300, along the second side 330. Therefore, the electrode lead 32 is connected to the bottom 223 of the secondary battery cell 200 through the openings 341, 341b. The stepped portion 333 extends to the openings 341, 341b of the bottom 340 of the sub-frame 300. Therefore, in the bottom 340, similar to the second side 330 described above, the stepped portion 333 including the electrode lead 32 is made flat with the same thickness as the other portions.

The ends 32a, 32b of the electrode lead 32 are connected to the secondary battery cells 200 through the two openings 341a, 341b formed through the bottom 340 of the sub-frame 300. Resistance welding or laser welding is used to make firmly the contact between the electrode lead 32 and the bottoms 223 of the secondary battery cell 200. As described above, since the electrode lead 32 is connected to the secondary battery cells 200 through the openings 341a, 341b of the bottom 340, via the second side 330 of the sub-frame 300, the combination of the electrode lead 32 and the secondary battery cells 200 becomes more firm. Therefore, the battery pack 100 can prevent the electrode lead 32 from separating from the secondary battery cell 200 due to an external shock, such as drop.

The PCM assembly 30 further includes a PTC (Positive Temperature Coefficient) device 33 formed on the electrode lead 32. The PTC device 33 is a protective device that is electrically connected between the PCM 31 and the secondary battery cells 200 to protect the secondary battery cells 200 by blocking current flow, when the secondary battery cells 200 are overheated above a predetermined temperature. The PTC is thicker than the electrode lead 32. Therefore, the stepped portion 333 for accommodating the PTC 33 is less thick than other portions in the stepped portion 333. Accordingly, it is possible to more improve the degree of flatness of the stepped portion 333.

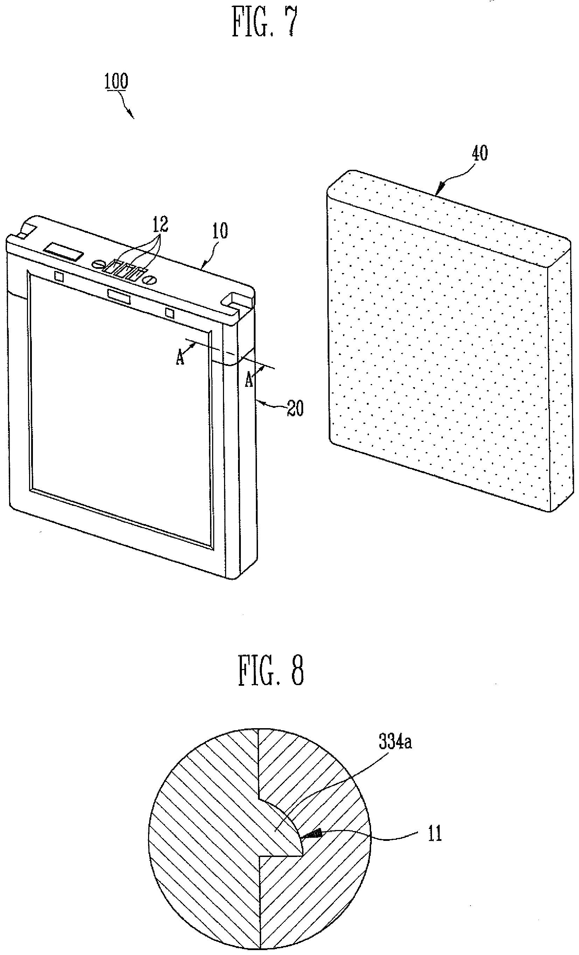

FIG. 7 is a view showing the sub-frame equipped with the first and second main frames and FIG. 8 is a cross-sectional view taken along line A-A of FIG. 7.

As shown in FIG. 7, the first and second frames 10, 20 cover the outer surface of the sub-frame 300. The first main frame 10 has terminal holes 12 such that the external terminals 31a of the PCM assembly 30 shown in FIGS. 5 and 6 are exposed. The main frame 10 covers the top 310 and portions of the first and second sides 320, 330 of the sub-frame 300, and the second sub-frame 20 covers the bottom 340 and the other portions of the first and second sides 320, 330 of the sub-frame 300.

Referring to FIG. 8, locking grooves 11 are formed on the inner surface of the first and second main frame 10, 20. The locking grooves 11 are positioned to correspond to the locking protrusions 334a, 334b of the sub-frame 300 shown in FIG. 6 and locked to the locking protrusions. Referring to FIG. 8, the locking protrusion 334a is locked in the locking groove 11 on the inner surface of the first main frame 10, such that the sub-frame 300 is firmly combined with the main frame 10.

Further, a locking groove (not shown) is also formed on the inner surface of the second main frame 20, corresponding to the position of the second locking protrusion (not shown) of the sub-frame 300 and locked to the second locking protrusion (not shown).

As described above, the battery pack according to this embodiment is manufactured by combining the first and second main frames 10, 20 with the sub-frame 300 and then covering this assembly with the covering member 40.

A battery pack according to the present invention can still be used easily, if the secondary battery cells have different outer shapes, by partially changing the components of the sub-frame of the battery pack. In detail, in a battery pack according to the present invention, when the outer shapes of the secondary battery cells of the battery pack are different from the embodiment described above, it is possible to change the components on the inner surface of the sub-frame to correspond to the outer shapes of the secondary battery cells. That is, it is possible to change the components of the sub-frames and use the PCM assembly and the first and second main frame which are mounted to the sub-frame without changing. Therefore, it is possible to maintain the outer shape of the battery pack without a change, regardless of the outer shapes of the secondary battery cell accommodated in the battery pack. Further, since the battery pack according to the present invention can be applied to various secondary battery cells by changing a portion of the sub-frame, it is possible to improve process efficiency. Further, it is possible to easily change capacity of the secondary battery cells accommodated in the battery pack, it is possible to achieve various capacities of the battery pack. Alternately, it is obviously possible to change the outer shape of the sub-frame and modify the first and second main frames and the PCM assembly. This is described hereafter in detail with reference to another embodiment of the present invention.

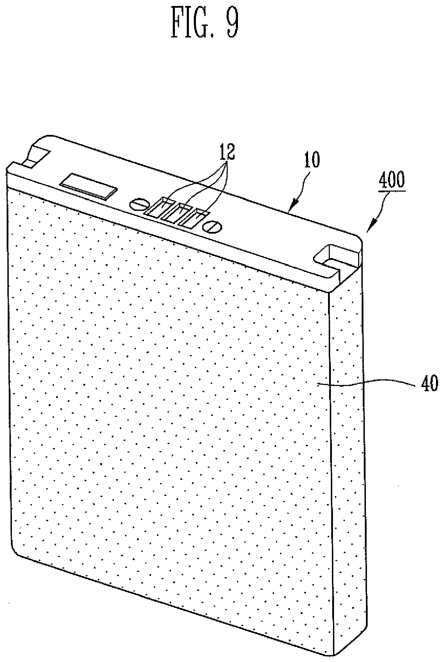

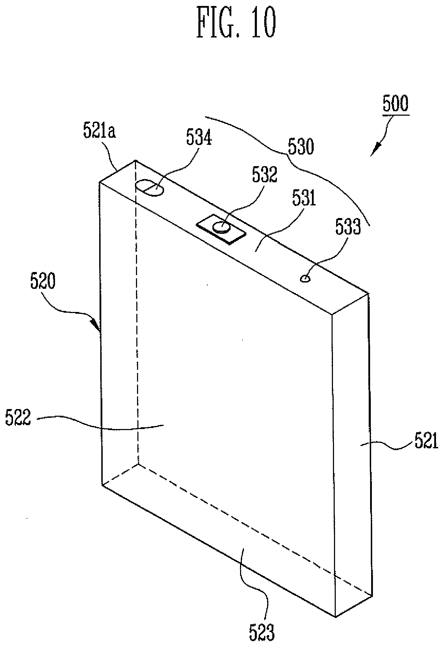

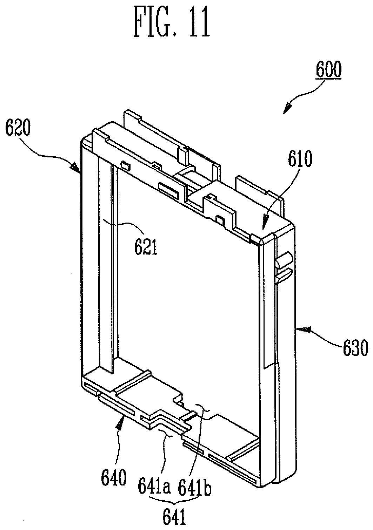

FIG. 9 is a perspective view of a battery pack according to another embodiment not forming part of the present invention and FIG. 10 is a perspective view of a secondary battery cell accommodated in the battery pack shown in FIG. 9. FIG. 11 is a perspective view of a sub-frame included in the battery pack according to this embodiment.

Referring to FIGS. 9 and 11, a battery pack 400 according to this embodiment includes: a plurality of secondary battery cells 500 and a rectangular sub-frame 600 fixing the sides of the secondary battery cells 500 and having an opening 641 corresponding to the bottoms 523 of the secondary battery cells 500. Further, the battery pack 400 further includes: a PCM (Protection Circuit Module) assembly (not shown) attached to the top of the sub-frame 600 to be electrically connected with the secondary battery cells; first and second main frames 10, 20 covering the outer surface of the sub-frame 600; and a covering member 40 covering the first and second main frame 10, 20 and a portion of the secondary battery cells 500.

The battery pack 400 is different from the embodiment of the present invention, which was described above, in the configurations of the secondary battery cells 500 and the sub-frame 600 accommodating the secondary battery cells 500. On the contrary, the other configurations, for example, the first and second main frames 10, 20, the PCM assembly 30, and the covering member 40 have the same configurations and functions. The same configurations are indicated by the same reference numerals in the figures and are not described in this embodiment.

Referring to FIG. 10 first, the secondary battery cell 500 accommodated in the battery pack 400 has similar configuration and function as the secondary battery cell 200, but has a different outer shape. The narrow side 521 of the secondary battery cell 500 is in perpendicular. In other words, the cap assembly 530 of the secondary battery cell 200 and the bottom 523 positioned to correspond to the cap assembly 530 are both rectangular. Therefore, the narrow side 521 of the secondary battery cell 200 which is in perpendicular contact with the cap assembly 530 and the bottom 523 is a plane. That is, the secondary battery cell 500 is a rectangular parallelepiped having the flat narrows side 521.

FIG. 11 is a perspective view of the sub-frame 600 included in the battery pack 500 according to this embodiment.

Two secondary battery cells 500 shown in FIG. 10 are accommodated in the sub-frame 600. The sub-frame 600 has a top 610, a bottom 640 formed opposite to the top 610, and two sides 620, 630 extending from the ends of the top 610 and bottom 640. That is, as shown in the figures, the sub-frame 600 may be a rectangular parallelepiped with two sides open.

First, the PCM assembly 31 is mounted on the top 610 of the sub-frame 600, as shown in FIG. 5. Further, the sub-frame 600 has a cathode pin hole 311 and a guide 312, as shown in FIG. 4.

Further, the sub-frame 600 has two sides 620, 630 extending from both ends of the top 610.

Protrusions 621 are formed on both sides 620, 630. In this configuration, both sides 620, 630 may not have a fixing rib, different from the embodiment shown in FIGS. 4A and 4B.

The flange 621 reinforces and supports the inside of the sub-frame 600 and guides the two secondary battery cells 500 accommodated inside the sub-frame 600. On the contrary, the secondary battery cell 500 according to this embodiment has rectangular sides. Therefore, the secondary battery cell 500 is in contact with the protrusion 621 of the sub-frame 600. That is, different from the embodiment described above, the side of the secondary battery cell 500 has a shape corresponding to the protrusion 621. Therefore, the secondary battery cell 500 is firmly fixed to the inner surfaces of the sub-frame 600 only be the protrusion 621, without a fixing rib.

The other features are the same as those described in the above embodiment and not additionally described.

Although embodiments of the present invention have been described above, it should be understood that the embodiments are provide to explain the present invention and do not limit the present invention. It should be understood that the present invention may be changed and modified in various ways by those skilled in the art, without departing from the scope of the present invention as defined by the appended claims.

## Claims

1. A battery pack comprising:
a first battery cell;
a second battery cell;
a frame accommodating the first and second battery cells (300); and
a protective circuit module (PCM) (30) assembly,
wherein the battery cells each comprise a respective electrode terminal and the frame comprises a hole, the location of the hole corresponding to the location of at least one of the electrode terminals; and
wherein the frame comprises an inwardly directed spacer formation located between the first and second battery cells for spacing them from each other, the spacer formation comprises at least one flange (321); **characterised in that**
the frame comprises two openings for allowing an electrode lead of the PCM assembly to make electrical contact with the two battery cells, and said openings are located on an opposite side of the frame to the said hole;
the ends of said electrode lead of the PCM assembly are firmly connected by resistance or laser welding to the battery cells through the said openings via a side of the frame; and
the frame comprises at least one rib (322, 332) extending between an inner surface thereof and the flange (321), the said rib having a profile that conforms to a surface of one of the first and second battery cells and serves as a seat for that surface.

2. A battery pack according to claim 1, wherein the spacer formation is shaped to conform to a surface of at least one of the first and second battery cells and serve as a seat for that surface.

3. A battery pack according to any preceding claim, wherein the battery cells are adhered to each other within the frame.

4. A battery pack according to Claim 3, wherein the battery cells are adhered to each other via an intermediate adhesive layer (240) comprising an opening therein.

5. A battery pack according to any preceding claim, wherein the said frame is an inner frame and the battery pack further comprises an outer frame in which the inner frame is accommodated, at least one of the inner frame and the outer frame comprising a locking formation (11, 334a, 334b) for securing engagement between the inner frame and the outer frame.

6. A battery pack according to Claim 5, wherein the outer frame comprises a first outer frame section (10) and a second outer frame section (20) and the said locking formation (11, 334a, 334b) comprises a first locking part and a second locking part; the first locking part effecting an engagement between the inner frame and the first outer frame section and the second locking part effecting an engagement between the inner frame and the second outer frame section.

7. A battery pack according to Claim 6, wherein the first locking part takes the form of a first locking protrusion (334a) and the second locking part takes the form of a second locking protrusion (334b).

8. A battery pack according to Claim 1, wherein the frame comprises a recess portion which extends to the said openings, and the PCM (30) assembly is at least partially accommodated within the said recess portion.

9. A battery pack according to Claim 8, wherein the PCM (30) assembly comprises a positive temperature coefficient (PTC) element (33) and the recess comprises an enlarged portion for accommodating the PTC element.

10. A battery pack according to any preceding claim, wherein the frame comprises a groove on a surface thereof that makes contact with one of the battery cells, the said groove being located at a position corresponding to an electrolyte injection hole of the battery cell.

## Patentansprüche

1. Batteriesatz, umfassend:
eine erste Batteriezelle;
eine zweite Batteriezelle;
einen Rahmen (300), der die ersten und zweiten Batteriezellen aufnimmt; und
eine Schutzschaltungsmodul-(PCM-)Baugruppe (30),
worin die Batteriezellen jeweils einen jeweiligen Elektrodenanschluss umfassen und der Rahmen ein Loch umfasst, wobei der Ort des Lochs dem Ort von mindestens einem der Elektrodenanschlüsse entspricht; und
worin der Rahmen eine nach innen gerichtete Abstandshalterstruktur umfasst, die zwischen den ersten und zweiten Batteriezellen angeordnet ist, um sie voneinander zu beabstanden, wobei die Abstandshalterstruktur mindestens einen vorspringenden Rand (321) umfasst; **dadurch gekennzeichnet, dass**:
der Rahmen zwei Öffnungen umfasst, um zu ermöglichen, dass eine Elektrodenzuleitung der PCM-Baugruppe elektrischen Kontakt mit den beiden Batteriezellen herstellt, und die Öffnungen an einer dem Loch gegenüberliegenden Seite des Rahmens angeordnet sind;
wobei die Enden der Elektrodenzuleitung der PCM-Baugruppe durch Widerstands- oder Laserschweißen durch die Öffnungen über eine Seite des Rahmens fest mit den Batteriezellen verbunden sind; und
der Rahmen mindestens eine Rippe (322, 332) umfasst, die sich zwischen einer inneren Oberfläche desselben und dem vorspringenden Rand (321) erstreckt, wobei die Rippe ein Profil hat, das mit einer Oberfläche einer der ersten und zweiten Batteriezellen übereinstimmt und als Auflage für diese Oberfläche dient.

2. Batteriesatz nach Anspruch 1, worin die Abstandshalterstruktur so geformt ist, dass sie mit einer Oberfläche mindestens einer der ersten und zweiten Batteriezellen übereinstimmt und als Auflage für diese Oberfläche dient.

3. Batteriesatz nach einem der vorhergehenden Ansprüche, worin die Batteriezellen innerhalb des Rahmens aneinandergeklebt sind.

4. Batteriesatz nach Anspruch 3, worin die Batteriezellen mittels einer dazwischenliegenden klebenden Schicht (240), die eine Öffnung darin umfasst, aneinandergeklebt sind.

5. Batteriesatz nach einem der vorhergehenden Ansprüche, worin der Rahmen ein innerer Rahmen ist und der Batteriesatz ferner einen äußeren Rahmen umfasst, in dem der innere Rahmen aufgenommen wird, wobei mindestens einer des inneren Rahmens und des äußeren Rahmens eine Verriegelungsstruktur (11, 334a, 334b) zum Sichern eines Eingriffs zwischen dem inneren Rahmen und dem äußeren umfasst.

6. Batteriesatz nach Anspruch 5, worin der äußere Rahmen einen ersten äußeren Rahmenabschnitt (10) und einen zweiten äußeren Rahmenabschnitt (20) umfasst und die Verriegelungsstruktur (11, 334a, 334b) einen ersten Verriegelungsteil und einen zweiten Verriegelungsteil umfasst, wobei der erste Verriegelungsteil einen Eingriff zwischen dem inneren Rahmen und dem ersten äußeren Rahmenabschnitt bewirkt und der zweite Verriegelungsteil einen Eingriff zwischen dem inneren Rahmen und dem zweiten äußeren Rahmenabschnitt bewirkt.

7. Batteriesatz nach Anspruch 6, worin der erste Verriegelungsteil die Form eines ersten Verriegelungsvorsprungs (334a) annimmt und der zweite Verriegelungsteil die Form eines zweiten Verriegelungsvorsprungs (334b) annimmt.

8. Batteriesatz nach Anspruch 1, worin der Rahmen einen Aussparungsabschnitt umfasst, der sich zu den Öffnungen erstreckt, und die PCM-Baugruppe (30) zumindest teilweise in dem Aussparungsabschnitt aufgenommen wird.

9. Batteriesatz nach Anspruch 8, worin die PCM-Baugruppe (30) ein Element (33) mit positivem Temperaturkoeffizienten (PTC) umfasst und die Aussparung einen vergrößerten Abschnitt zum Aufnehmen des PTC-Elements umfasst.

10. Batteriesatz nach einem der vorhergehenden Ansprüche, worin der Rahmen eine Einkerbung auf einer Oberfläche desselben umfasst, die Kontakt mit einer der Batteriezellen herstellt, wobei die Einkerbung an einer Position angeordnet ist, die einem Elektrolyt-Injektionsloch der Batteriezelle entspricht.

## Revendications

1. Bloc-batterie comprenant :
un premier élément de batterie ;
un deuxième élément de batterie ;
un bâti accueillant les premier et deuxième éléments de batterie (300) ; et
un ensemble formant module de circuit de protection (PCM),
dans lequel les éléments de batterie comprennent respectivement une borne d'électrode respective et le bâti comprend un trou, l'emplacement du trou correspondant à l'emplacement d'au moins une des bornes d'électrode ; et
dans lequel le bâti comprend un ensemble formant entretoise orienté vers l'intérieur et située entre les premier et deuxième éléments de batterie afin de les éloigner les uns des autres, l'ensemble formant entretoise comprenant au moins une bride (321) ; **caractérisé en ce que**
le bâti comprend deux ouvertures pour permettre à un fil d'électrode de l'ensemble formant PCM de créer un contact électrique avec les deux éléments de batteries, et lesdites ouvertures sont situées sur un côté du bâti qui fait face audit trou ;
les extrémités dudit fil d'électrode de l'ensemble formant PCM sont fermement raccordées, grâce à un soudage par résistance ou par laser, aux éléments de batterie à travers lesdites ouvertures via un côté du bâti ; et
le bâti comprend au moins une nervure (322, 332) s'étendant entre une surface intérieure de celui-ci et la bride (321), ladite nervure présentant un profil qui correspond à une surface d'un élément parmi les premier et deuxième éléments de batterie et qui sert d'assise pour ladite surface.

2. Bloc-batterie selon la revendication 1, dans lequel l'ensemble formant entretoise est formé de manière à correspondre à une surface d'au moins un élément parmi les premier et deuxième éléments de batterie et pour servir d'assise pour ladite surface.

3. Bloc-batterie selon l'une quelconque des revendications précédentes, dans lequel les éléments de batterie sont collés les uns aux autres au sein du bâti.

4. Bloc-batterie selon la revendication 3, dans lequel les éléments de batterie sont collés les uns aux autres via une couche adhésive intermédiaire (240) comprenant une ouverture en son sein.

5. Bloc-batterie selon l'une quelconque des revendications précédentes, dans lequel ledit bâti est un bâti intérieur et le bloc-batterie comprend en outre un bâti extérieur au sein duquel est accueilli le bâti intérieur, au moins un parmi le bâti intérieur et le bâti extérieur comprenant un ensemble de verrouillage (11, 334a, 334b) permettant d'assurer une mise en prise entre le bâti intérieur et le bâti extérieur.

6. Bloc-batterie selon la revendication 5, dans lequel le bâti extérieur comprend une première section de bâti extérieur (10) et une deuxième section de bâti extérieur (20) et ledit ensemble de verrouillage (11, 334a, 334b) comprend une première pièce de verrouillage et une deuxième pièce de verrouillage ; la première pièce de verrouillage réalisant une mise en prise entre le bâti intérieur et la première section de bâti extérieur et la deuxième pièce de verrouillage réalisant une mise en prise entre le bâti intérieur et la deuxième section de bâti extérieur.

7. Bloc-batterie selon la revendication 6, dans lequel la première pièce de verrouillage prend la forme d'une première partie saillante de verrouillage (334a) et la deuxième pièce de verrouillage prend la forme d'une deuxième partie saillante de verrouillage (334b).

8. Bloc-batterie selon la revendication 1, dans lequel le bâti comprend une partie de renfoncement qui s'étend vers lesdites ouvertures, et l'ensemble formant PCM (30) est au moins partiellement accueilli au sein de ladite partie renfoncement.

9. Bloc-batterie selon la revendication 8, dans lequel l'ensemble formant PCM (30) comprend un élément à coefficient de température positive (PTC) (33) et le renfoncement comprend une partie agrandie permettant d'accueillir l'élément à PTC.

10. Bloc-batterie selon l'une quelconque des revendications précédentes, dans lequel le bâti comprend sur une de ses surfaces une rainure qui crée un contact avec un des éléments de batterie, ladite rainure étant située au niveau d'une position correspondant à un trou d'injection d'électrolyte de l'élément de batterie.
